# EUROPEAN PATENT SPECIFICATION

(11) **EP 2 261 497 B1**
(45) Date of publication and mention of the grant of the patent: **18.07.2012**
(21) Application number: 09729121.5
(22) Date of filing: 02.04.2009
(51) Int. Cl.: F02M 55/02, F02M 63/00, F16L 57/00

(54) **PIPE JOINT COVER**
ROHRVERBINDUNGSABDECKUNG
COUVRE-JOINT POUR TUYAU

(30) Priority: 02.04.2008 JP 2008096173
(43) Date of publication of application: 15.12.2010
(73) Proprietor: NIFCO INC., Yokohama-shi, Kanagawa, 244-8522 (JP)
(72) Inventor: NISHIDA, Ryuhei, Yokohama-shi Kanagawa 244-8522 (JP)
(74) Representative: Gassner, Wolfgang
(86) International application number: PCT/JP2009/056903
(87) International publication number: WO 2009/123291

(56) References cited:
- WO-A1-2006/059050
- WO-A1-2006/059050
- JP-A- 2000 320 426
- JP-U- 54 182 722
- JP-U- 55 102 068
- JP-U- 58 162 278
- JP-Y- 45 023 208
- US-A- 5 158 114

## Description

### Technical Field

This invention relates to a pipe connector cover for covering a connector of a high pressure fuel pipe, for example, of a diesel engine, so that fuel that sprays from the connector of the high pressure fuel pipe does not disperse to the surroundings.

### Background Art

In the case when fuel leaks from a connector of a high pressure fuel pipe of a diesel engine, it is very dangerous because the fuel sprays as a high-temperature, high-pressure mist toward one direction from between the high pressure fuel pipe and a fastener (for example, a nut), and there is a possibility of igniting.
Therefore, there is proposed a pipe connector cover for preventing fuel that leaks from a connector of a high pressure fuel pipe from dispersing to the surroundings and for recovering fuel that leaks from the connector.

This pipe connector cover is constituted by two protective elements that form a closed chamber for enclosing fuel that leaks from the connector, a discharge port that is provided on one of these two protective elements, and a discharge pipe section that extends from this discharge port and is used for allowing fuel inside the closed chamber to flow to the outside.
Also, a seal part made of soft material is provided on the oppositely facing end of each protective element (for example, see pamphlet of International Application No. 2006/059050).

### Summary of the Invention

### Problem to be Solved by the Invention

However, in the abovementioned conventional pipe connector cover, because a seal part for sealing the connector of the high pressure fuel pipe is provided in a manner so as to surround the connector, it is not possible to install the pipe connector cover on a section of the high pressure fuel pipe avoiding the connector of the high pressure fuel pipe, and to move the pipe connector cover along the high pressure fuel pipe to cover the connector of the high pressure fuel pipe with the pipe connector cover.

Accordingly, when a plurality of, for example, four (in the case of four cylinders), six (in the case of six cylinders), or eight (in the case of eight cylinders), connectors of high pressure fuel pipes is proximal, it is difficult and troublesome to install pipe connector covers in a manner so as to cover the respective connectors.

### Means for Solving the Problem

This invention was created in order to solve the abovementioned problem, and the object is to provide a pipe connector cover for which the installation operation is simple and with which it is possible to assuredly prevent leaking (spraying) fuel from dispersing to the surroundings. The substance thereof is as follows:

(1) An arrangement according to claim 1 having pipe connector cover for covering a connector of a high pressure fuel pipe of an engine, in which one end of a cylindrical cover part is blocked by a blocking part that has a pipe insertion hole, wherein the aforementioned blocking part includes a seal part in which an inner perimeter that forms the aforementioned pipe insertion hole is adhered closely to an outer perimeter of the aforementioned high pressure fuel pipe, and a receiving chamber that is positioned outside of this seal part, is open on a lower face, and is used for receiving fuel that sprays from the aforementioned connector; and a lower end of a receiving chamber outer wall that forms this receiving chamber is contacted with an upper surface of a fastening tool that constitutes the aforementioned connector.

(2) The pipe connector cover according to (1), wherein an open part is provided on the aforementioned receiving chamber outer wall.

(3) The pipe connector cover according to (1) or (2), wherein the aforementioned receiving chamber is provided around the entirety of the outer perimeter of the aforementioned high pressure fuel pipe or in an arc form on the outer perimeter of the aforementioned high pressure fuel pipe; and an outer surface of the aforementioned seal part is an inclined surface that approaches the aforementioned high pressure fuel pipe as it goes toward the aforementioned connector.

(4) The pipe connector cover according to any one of (1) to (3), wherein at least the aforementioned seal part and a lower end of the aforementioned receiving chamber outer wall are formed with a soft material.

(5) The pipe connector cover according to any one of (1) to (4), wherein an insertion-coupling receiving part into which the aforementioned fastening tool is insertion-coupled is provided inside the other end of the aforementioned cover part.

(6) The pipe connector cover according to any one of (1) to (5), wherein the pipe connector cover constitutes divided pipe connector covers that are divided into two parts on a plane parallel to the axial direction of the aforementioned high pressure fuel pipe; and each of these divided pipe connector covers is provided with a catch-coupling part and a catch-coupling receiving part for integrally coupling the two parts.

### Effect of the Invention

According to this invention, because the blocking part is provided on only one end of the cylindrical cover part, it is possible to install the pipe connector cover on a section of the high pressure fuel pipe avoiding the connector of the high pressure fuel pipe, and then to move the pipe connector cover along the high pressure fuel pipe to cover the connector of the high pressure fuel pipe with the pipe connector cover.

Accordingly, even in the case when a plurality of, for example, four (in the case of four cylinders), six (in the case of six cylinders), or eight (in the case of eight cylinders), connectors of high pressure fuel pipes is provided proximally, it is possible to install the pipe connector cover in a manner so as to cover each connector of the high pressure fuel pipes, by installing the pipe connector cover on a section of the high pressure fuel pipe away from the connector, and then moving the pipe connector cover along the high pressure fuel pipe, and therefore the installation operation for the pipe connector cover becomes simple.

Also, in the case when fuel leaks from a connector of a high pressure fuel pipe of an engine, because the fuel sprays a high-temperature, high-pressure mist toward one direction, for example, from between the high pressure fuel pipe and a fastener (for example, a fixing nut), it is possible to assuredly prevent the sprayed fuel from dispersing to the surroundings, by providing the blocking part on only one end of the cylindrical cover part.

Also, because an open part is provided on the receiving chamber outer wall, it is possible to actively discharge fuel that leaks from the connector of the high pressure fuel pipe and liquefies contacting with the pipe connector cover to the outside of the receiving chamber.

Furthermore, because the receiving chamber is provided around the entirety of the outer perimeter of the high pressure fuel pipe or in an arc form on the outer perimeter of the high pressure fuel pipe, and because an outer surface of the seal part has an inclined surface that approaches the high pressure fuel pipe as it goes toward the connector, (the pressure of) the fuel leaking from the connector acts on the inclined surface of the seal part, whereby (the inner perimeter of) the seal part is adhered more closely to the outer perimeter of the high pressure fuel pipe, and therefore the seal quality can be improved.

Also, because at least the seal part and the lower end of the receiving chamber outer wall are formed with a soft material, the seal quality of the seal part is improved, and even when the lower end of the receiving chamber outer wall moves back and forth against the fastening tool, there is no noise made from the lower end of the receiving chamber outer wall hitting the fastening tool.

Furthermore, because the fastening tool with an insertion-coupling receiving part capable of coupling is provided inside the other end of the cover part, it is possible to install the pipe connector cover in a manner so as not to rotate in the circumferential direction of the high pressure fuel pipe, by insertion-coupling the fastening tool into the insertion-coupling receiving part.

Also, because the pipe connector cover is constituted by divided pipe connector covers that are divided into two parts on a plane parallel to the axial direction of the high pressure fuel pipe, and because each of these divided pipe connector covers is provided with a catch-coupling part and a catch-coupling receiving part for integrally coupling the two parts, it is possible to install the pipe connector cover on the high pressure fuel pipe by positioning the high pressure fuel pipe between the two divided pipe connector covers, holding the high pressure fuel pipe between the two divided pipe connector covers, and catch-coupling each catch-coupling part to the corresponding catch-coupling receiving part, and therefore the installation of the pipe connector cover on the high pressure fuel pipe becomes simpler.

### Brief Description of the Drawings

FIG. 1 is an exploded perspective view of a pipe connector cover which is one working example of this invention.
FIG. 2 is a plan view of the divided cover part shown in FIG. 1.
FIG. 3 is a front view of the divided cover part shown in FIG. 2.
FIG. 4 is a back view of the divided cover part shown in FIG. 2.
FIG. 5 is a right side view of the divided cover part shown in FIG. 2.
FIG. 6 is a sectional view along the A-A line in FIG. 2.
FIG. 7 is a sectional view along the B-B line in FIG. 3.
FIG. 8 is a sectional view along the C-C line in FIG. 3.
FIG. 9 is a cut-away end view along the D-D line in FIG. 3.
FIG. 10 is a plan view of the divided blocking part shown in FIG. 1.
FIG. 11 is a front view of the divided blocking part shown in FIG. 10.
FIG. 12 is a back view of the divided blocking part shown in FIG. 10.
FIG. 13 is a bottom view of the divided blocking part shown in FIG. 10.
FIG. 14 is a right side view of the divided blocking part shown in FIG. 10.
FIG. 15 is a sectional view along the E-E line in FIG. 11.
FIG. 16 is a sectional view along the F-F line in FIG. 11.
FIG. 17 is a perspective view of the condition in which each member shown in FIG. 1 is connected together as a pipe connector cover.
FIG. 18 is a plan view of the pipe connector cover shown in FIG. 17.
FIG. 19 is a front view of the pipe connector cover shown in FIG. 18.
FIG. 20 is a bottom view of the pipe connector cover shown in FIG. 18.
FIG. 21 is a right side view of the pipe connector cover shown in FIG. 18.
FIG. 22 is a sectional view along the G-G line in FIG. 18.
FIG. 23 is a cut-away end view along the H-H line in FIG. 19.
FIG. 24 is a sectional view along the I-I line in FIG. 19.
FIG. 25 is an explanatory drawing of the installation of the pipe connector cover.
FIG. 26 is an explanatory drawing of the installation of the pipe connector cover.

### Modes of Working of the Invention

Working examples of this invention are described below on the basis of the drawings.

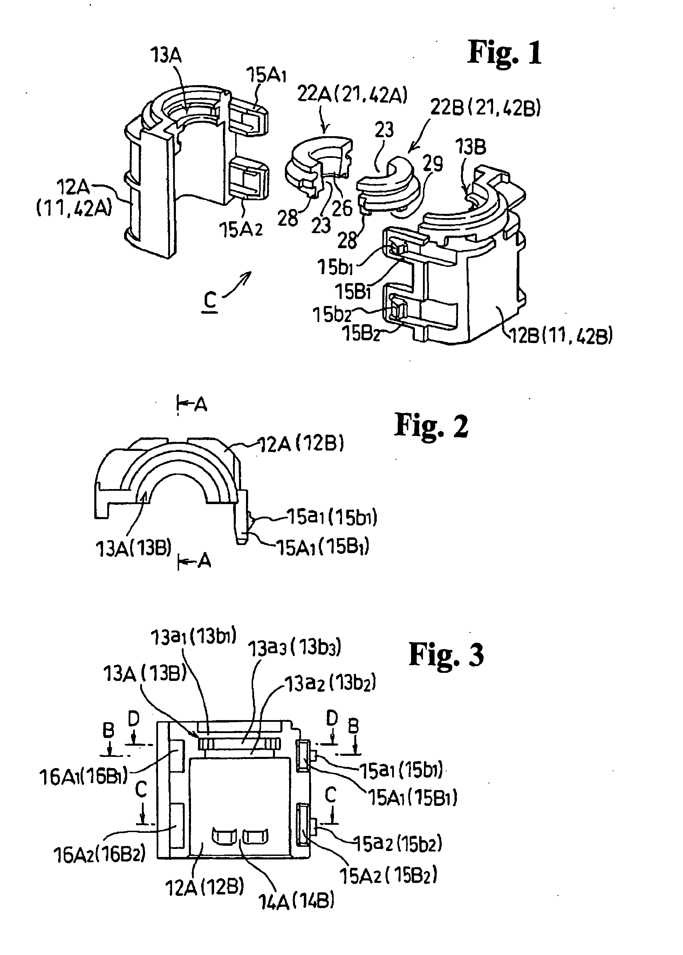

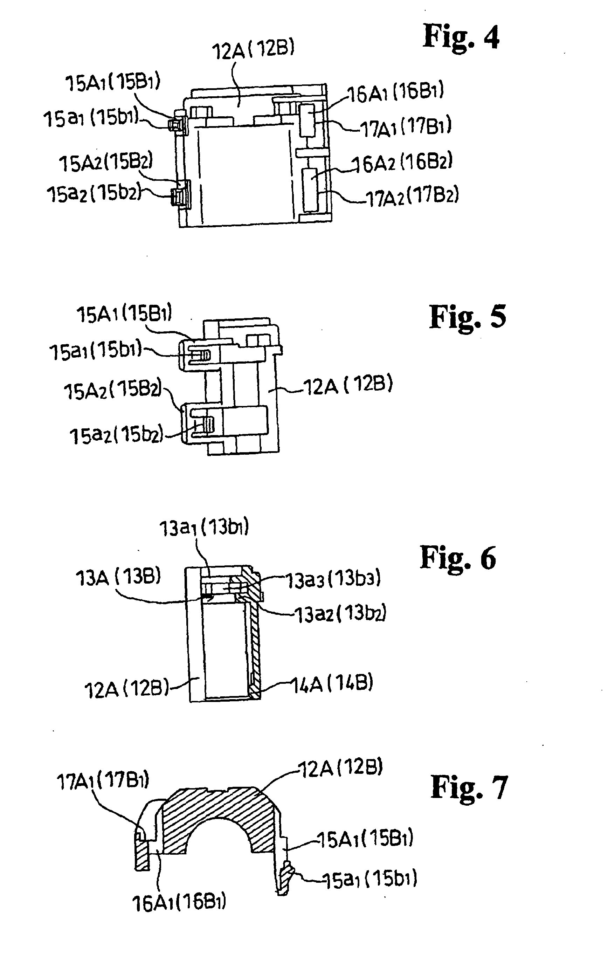

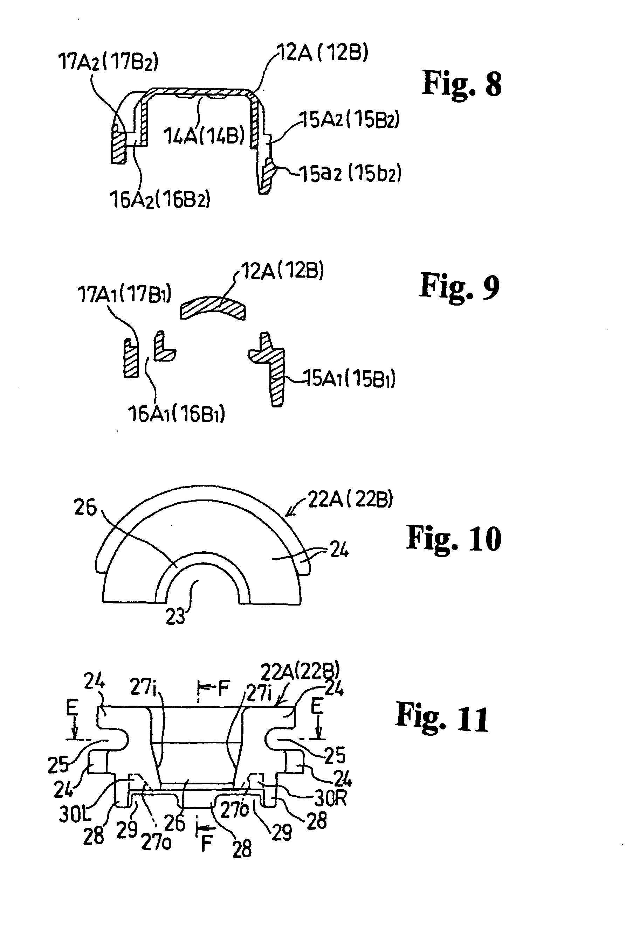

FIG. 1 shows a exploded perspective view of a pipe connector cover which is one working example of this invention, FIG. 2 shows a plan view of the divided cover part shown in FIG. 1, FIG. 3 shows a front view of the divided cover part shown in FIG. 2, FIG. 4 shows a back view of the divided cover part shown in FIG. 2, and FIG. 5 shows a right side view of the divided cover part shown in FIG. 2. FIG. 6 shows a sectional view along the A-A line in FIG. 2, FIG. 7 shows a sectional view along the B-B line in FIG. 3, FIG. 8 shows a sectional view along the C-C line in FIG. 3, and FIG. 9 shows a cut-away end view along the D-D line in FIG. 3.

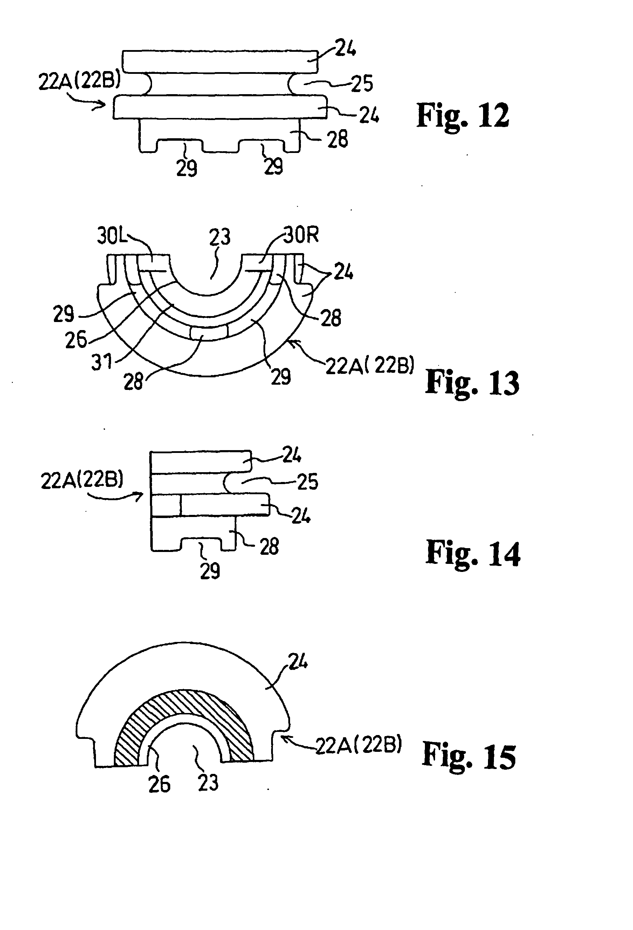

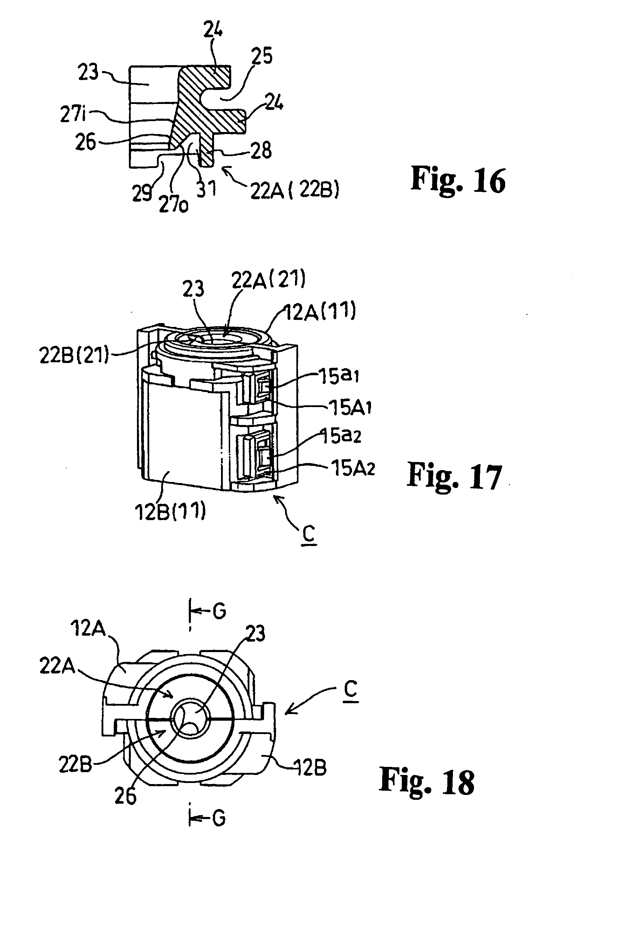

Also, FIG. 10 shows a plan view of the divided blocking part shown in FIG. 1, FIG. 11 shows a front view of the divided blocking part shown in FIG. 10, FIG. 12 shows a back view of the divided blocking part shown in FIG. 10, FIG. 13 shows a bottom view of the divided blocking part shown in FIG. 10, and FIG. 14 shows a right side view of the divided blocking part shown in FIG. 10. Also, FIG. 15 shows a sectional view along the E-E line in FIG. 11, and FIG. 16 shows a sectional view along the F-F line in FIG. 11.

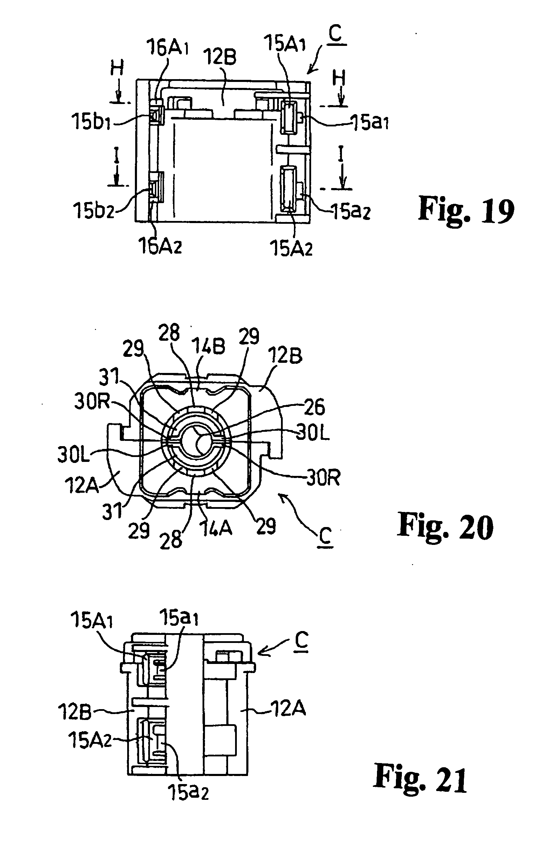

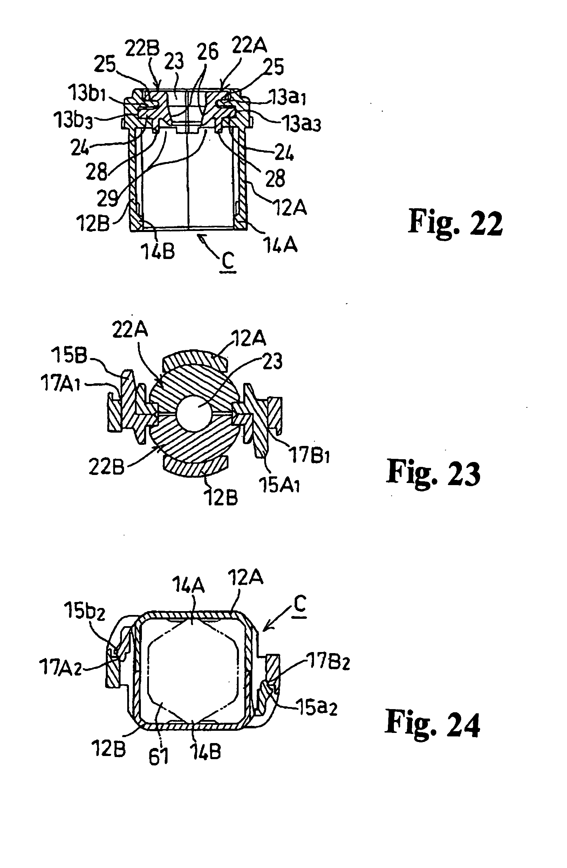

Also, FIG. 17 shows a perspective view of the condition when each member shown in FIG. 1 is connected together as a pipe connector cover, FIG. 18 shows a plan view of the pipe connector cover shown in FIG. 17, FIG. 19 shows a front view of the pipe connector cover shown in FIG. 18, FIG. 20 shows a bottom view of the pipe connector cover shown in FIG. 18, FIG. 21 shows a right side view of the pipe connector cover shown in FIG. 18, FIG. 22 shows a sectional view along the G-G line in FIG. 18, FIG. 23 shows a cut-away end view along the H-H line in FIG. 19, FIG. 24 shows a sectional view along the I-I line in FIG. 19, and FIG. 25 and FIG. 26 show explanatory drawings of the installation of the pipe connector cover.
The reduced scale is different between the divided cover part shown in FIG. 2-FIG. 9 and the divided blocking part shown in FIG. 10-FIG. 16.

The pipe connector cover C, which is one working example of this invention, is a cover for covering a connector of a high pressure fuel pipe of an engine as an example, and it constitutes a cover part 11, and a blocking part 21 for blocking one end (upper end) of the cover part 11, as shown in FIG. 1.

The cover part 11 comprises divided cover parts 12A, 12B, which are divided into two parts on a plane parallel to the axial direction. It is preferable that the divided cover parts 12A, 12B be manufactured, for example, by molding hard synthetic resin. The divided cover part 12A is of the same constitution as the divided cover part 12B, and these are connected together to become cylindrical.

The blocking part 21 comprises divided blocking parts 22A, 22B, which are divided into two parts on a plane parallel to the axial direction. It is preferable that the divided blocking parts 22A, 22B be manufactured, for example, by molding soft synthetic resin. The divided blocking part 22A is of the same constitution as the divided blocking part 22B, and these are connected together to constitute an annular blocking part 21. Also, the inner perimeter of the blocking part 21 becomes a pipe insertion hole 23 (see FIG. 18).

Also, a divided pipe connector cover 42A constitutes the divided cover part 12A, and the divided blocking part 22A, which is installed in this divided cover part 12A. Also, a divided pipe connector cover 42B constitutes the divided cover part 12B, and the divided blocking part 22B, which is installed in this divided cover part 12B.

On the inside of one end (upper end) of the abovementioned divided cover part 12A (12B), as shown in FIG. 3 and FIG. 6, there is provided a divided insertion-coupling receiving annular part 13A (13B), which comprises two divided annular protruding parts 13a1, 13a2 (13b1, 13b2), above and below, and one divided annular recessed part 13a3 (13b3) positioned between these two divided annular protruding parts 13a1, 13a2 (13b1, 13b2).

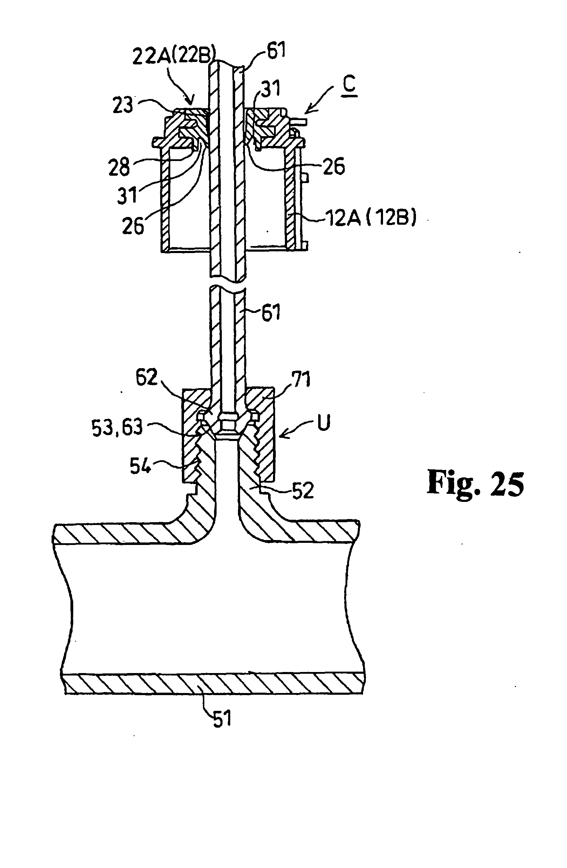

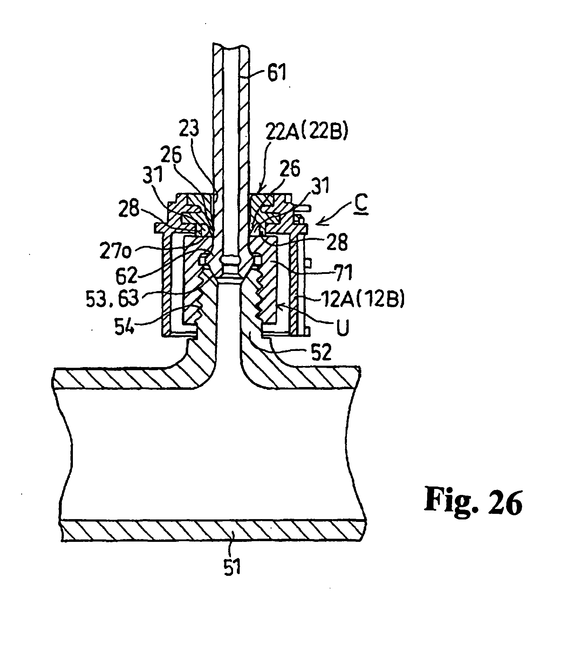

Also, on the inside of the other end (lower end) of the divided cover part 12A (12B), as shown in FIG. 3, FIG. 6, and FIG. 8, there is provided a divided insertion-coupling receiving part 14A (14B), into which is insertion-coupled a fixing nut 71 (see FIG. 25 and FIG. 26) to be described later.

Furthermore, on the right side edge of the divided cover part 12A (12B), as shown in FIG. 2-FIG. 5, FIG. 7, or FIG. 8, there are provided a catch-coupling projection 15a1 (15b1) and a catch-coupling projection 15a2 (15b2) for integrally connecting the divided cover parts 12A, 12B together. The catch-coupling projection 15a1 (15b1) and the catch-coupling projection 15a2 (15b2) are one example of the catch-coupling part of the present invention, and they are provided above and below so as to project from the outside surface, as shown in FIG. 2-FIG. 5, FIG. 7, or FIG. 8.

Also, on the left side edge of the divided cover part 12A (12B), as shown in FIG. 3, FIG. 4, or FIG. 7-FIG. 9, an insertion hole 16A1 (16B1) and an insertion hole 16A2 (16B2) are provided above and below. Also, on the left side edge of the divided cover part 12A (12B), as shown in FIG. 4, FIG. 7, FIG. 8, or FIG. 9, a catching part 17A1 (17B1) and a catching part 17A2 (17B2) are provided above and below. The catching part 17A1 (17B1) and the catching part 17A2 (17B2) are one example of the catch-coupling receiving part of the present invention.

When integrally connecting together the divided cover parts 12A, 12B, first, a catch-coupling piece 15B1 (15A1) is inserted into the insertion hole 16A1 (16B1), and a catch-coupling piece 15B2 (15A2) is inserted into the insertion hole 16A2 (16B2). Also, the catch-coupling projection 15b1 (15a1) is caught in the catching part 17A1 (17B1), and the catch-coupling projection 15b2 (15a2) is caught in the catching part 17A2 (17B2).

The blocking part 21, in which the abovementioned divided blocking parts 22A (22B) are connected together, is constituted by an insertion-coupling annular part 24 (see FIG. 10-FIG. 16), a receiving chamber outer wall 28 (see FIG. 11-FIG. 14 and FIG. 16), and connecting walls 30L, 30R (see FIG. 11 and FIG. 13). Also, inside the blocking part 21, as shown in FIG. 11, FIG. 13, and FIG. 16, there is seal part 26, which is roughly circular in sectional shape orthogonal to the axial direction, and is formed so that the sectional shape gradually becomes smaller as it goes from top to bottom.

The insertion-coupling annular part 24 is a circular annular projection that is formed on the outer perimeter of the blocking part 21 (divided blocking parts 22A, 22B). This insertion-coupling annular part 24 is insertion-coupled into the divided insertion-coupling receiving annular part 13A (13B) of the divided cover part 12A (12B). The receiving chamber outer wall 28 is a circular annular projection that projects downward from the bottom of the blocking part 21. The connecting walls 30L, 30R connect two ends in the circumferential direction of the receiving chamber outer wall 28 and two corresponding ends in the circumferential direction of the seal part 26 by two ends in the circumferential direction of the insertion-coupling annular part 24.

As shown in FIG. 13 and FIG. 16, a divided receiving chamber 31 is formed by the connecting walls 30L, 30R, the insertion-coupling annular part 24, the seal part 26, and the receiving chamber outer wall 28. Also, the lower face of the divided receiving chamber 31 is open.

Also, on the outer perimeter of the insertion-coupling annular part 24, there is provided a divided insertion-coupling recessed part 25, into which the divided annular protruding parts 13a1 (13b1) of the divided cover part 12A (12B) are insertion-coupled. Also, as shown in FIG. 11 and FIG. 16, the inner perimeter surface and the outer perimeter surface (outer surface) of the seal part 26 are a conical surface 27i and a conical surface (inclined surface) 27o, which respectively approach the high pressure fuel pipe, inserted into the pipe insertion hole 23, as they progress downward. Also, on the lower end of the receiving chamber outer wall 28, as shown in FIG. 11-FIG. 14 and FIG. 16, a plurality of cut-outs 29, which function as open parts, are provided in the circumferential direction.

The pipe connector cover C, which is one working example of this invention, is used for covering a connector U shown in FIG. 25 as an example. This connector U includes a connecting cylinder part 52 provided on a common rail 51, and a fixing nut 71, which is a fastening tool for fixing a high pressure fuel pipe 61 to the connecting cylinder part.

On the abovementioned connecting cylinder part 52, a conical surface 53 that becomes narrower toward the center below is provided as a connecting surface on the front end (upper end), and a threaded hole 54 is provided on the outer perimeter of the front end (upper part). Also, on the high pressure fuel pipe 61, there is provided a thick part 62, which has a conical surface (connecting surface) 63 that widens from bottom to top for contacting with the conical surface 53 of the connecting cylinder part 52.

An example of assembly of the pipe connector cover C is next described.

First, the divided insertion-coupling recessed part 25 provided on the insertion-coupling annular part 24 of the divided blocking part 22A is insertion-coupled to the divided annular protruding part 13a1 constituting the divided insertion-coupling receiving annular part 13A of the divided cover part 12A, and the lower side of the divided annular insertion-coupling part 24 is insertion-coupled into the divided annular recessed part 13a3 constituting the divided insertion-coupling receiving annular part 13A, whereby the divided blocking part 22A is installed on the divided cover part 12A.

Also, the divided insertion-coupling recessed part 25 provided on the insertion-coupling annular part 24 of the divided blocking part 22B is insertion-coupled to the divided annular protruding part 13b1 constituting the divided insertion-coupling receiving annular part 13B of the divided cover part 12B, and the lower side of the divided annular insertion-coupling part 24 is insertion-coupled into the divided annular recessed part 13b3 constituting the divided insertion-coupling receiving annular part 13B, whereby the divided blocking part 22B is installed on the divided cover part 12B.

Also, the catch-coupling pieces 15B1, 15B2 of the divided cover part 12B are placed opposite the insertion holes 16A1, 16A2 of the divided cover part 12A, and the catch-coupling pieces 15A1, 15A2 of the divided cover part 12A are placed opposite the insertion holes 16B1, 16B2 of the divided cover part 12B, and then the divided cover parts 12A, 12B (divided pipe connector covers 42A, 42B) are brought closer to each other. Also, the catch-coupling pieces 15B1, 15B2 are inserted into the insertion holes 16A1, 16A2, and the catch-coupling pieces 15A1, 15A2 are inserted into the insertion holes 16B1, 16B2.

Thus, when the catch-coupling pieces 15B1, 15B2 are inserted into the insertion holes 16A1, 16A2, and the catch-coupling pieces 15A1, 15A2 are inserted into the insertion holes 16B1, 16B2, the catch-coupling projections 15a1, 15a2, 15b1, 15b2 bend inward by the elasticity of the catch-coupling pieces 15A1, 15A2, 15B1, 15B2, and upon passing through the insertion holes 16B1, 16B2, 16A1, 16A2, return to the original state (outward) by the elasticity of the catch-coupling pieces 15A1, 15A2, 15B1, 15B2. Therefore, the catch-coupling projections 15a1, 15a2, 15b1, 15b2 are respectively catch-coupled into the catching parts 17B1, 17B2, 17A1, 17A2, and the pipe connector cover C can be assembled as shown in FIG. 17-FIG. 24.

Thus, when the pipe connector cover C is assembled, it can be put into a condition in which at least the divided blocking parts 22A, 22B are closely adhered together, and there is no gap between the divided blocking part 22A and the divided blocking part 22B.

An example of installation of the pipe connector cover C is next briefly described.

First, as shown in FIG. 25, a high pressure fuel pipe 61 is positioned between the divided cover parts 12A, 12B and the blocking parts 22A, 22B on a section of the high pressure fuel pipe 61 avoiding the connector U of the high pressure fuel pipe 61, that is, away from the connector U of the high pressure fuel pipe 61, and the pipe connector cover C is assembled as described above, whereby the pipe connector cover C can be installed on the high pressure fuel pipe 61 in a condition in which the high pressure fuel pipe 61 is positioned inside the pipe insertion hole 23.

Thus, when the pipe connector cover C is installed on the high pressure fuel pipe 61, the inner perimeter on the lower side of the seal part 26 and the outer perimeter of the high pressure fuel pipe 61 are closely adhered.

Also, the pipe connector cover C is moved along the high pressure fuel pipe 61 in a condition in which the inner perimeter of the seal part 26 is in contact with the outer perimeter of the high pressure fuel pipe 61, and the part above the fixing nut 71 is insertion-coupled into the divided insertion-coupling parts 14A, 14B as shown in FIG. 24, then the pipe connector cover C is pushed downward, and the lower end of the receiving chamber outer wall 28 is placed in contact with the upper face of the fixing nut 71, whereby the connector U can be covered by the pipe connector cover C as shown in FIG. 26.

The operation of the pipe connector cover C is briefly described next.

In the case when fuel leaks from the connector U of the high pressure fuel pipe 61, in FIG. 26, the fuel sprays as a high-temperature, high-pressure mist toward one direction (upward) from between the high pressure fuel pipe 61 and the fixing nut 71. Thus, when the fuel sprays upward from between the high pressure fuel pipe 61 and the fixing nut 71, the leaking fuel is received in each divided receiving chamber 31, and the pressure of the fuel acts on the conical surface (inclined surface) 27o of the seal part 26, whereby the part beneath the conical surface 27i of the seal part 26 is adhered more closely to the outer perimeter of the high pressure fuel pipe 61, and the seal quality is improved.

Also, the fuel received in each divided receiving chamber 31 liquefies in contact with the pipe connector cover C (each insertion-coupling annular part 24, each divided sheet part 26, each divided receiving chamber outer perimeter wall 28, and each connecting wall 30L, 30R), is discharged from each cut-out 29 to the outside of each divided receiving chamber 31, and flows down between the divided cover parts 12A, 12B and the fixing nut 71.

Thus, because the fuel leaking from the connector U of the high pressure fuel pipe 61 flows down in a liquefied state between the divided cover parts 12A, 12B and the fixing nut 71, it is safe with no danger of igniting.

According to one working example of this invention as described above, because the blocking part 21 is provided on only one end of the cylindrical cover part 11, it is possible to install and position the pipe connector cover C on a section of the high pressure fuel pipe 61 avoiding the connector U of the high pressure fuel pipe 61, and then to move the pipe connector cover C along the high pressure fuel pipe 61 to cover the connector U of the high pressure fuel pipe 61 with the pipe connector cover C.

Accordingly, even when a plurality of, for example, four (in the case of four cylinders), six (in the case of six cylinders), or eight (in the case of eight cylinders), connectors U of high pressure fuel pipes 61 is proximal, it is possible to install the pipe connector cover C in a manner so as to cover each connector U of the high pressure fuel pipes 61, by installing and positioning the pipe connector cover C on a section of the high pressure fuel pipe 61 away from the connector U of the high pressure fuel pipe 61, and then moving the pipe connector cover C along the high pressure fuel pipe 61, and therefore the installation operation for the pipe connector cover C becomes simple.

Also, in the case when fuel leaks from a connector U of a high pressure fuel pipe 61 of an engine, the fuel sprays as a high-temperature, high-pressure mist toward one direction, for example, from between the high pressure fuel pipe 61 and the fixing nut 71. Accordingly, with the pipe connector cover C of the present working example, it is possible to assuredly prevent the sprayed fuel from dispersing to the surroundings, by providing the blocking part 21 on only one end of the cylindrical cover part.

Also, because a cut-out 29 is provided on the receiving chamber outer wall 28, it is possible to actively discharge fuel that leaks from the connector U of the high pressure fuel pipe 61 and liquefies in contact with the pipe connector cover C to the outside of the receiving chamber 31.

Furthermore, because the divided receiving chamber 31 is provided in an arc form on the outer perimeter of the high pressure fuel pipe 61, and because the outer surface of the seal part 26 has a conical surface (inclined surface) 27o that approaches the high pressure fuel pipe 61 as it goes toward the connector U, (the pressure of) the fuel leaking from the connector U acts on the conical surface 27o of the seal part 26, whereby (the inner perimeter of) the seal part 26 is adhered more closely to the outer perimeter of the high pressure fuel pipe 61, and therefore the seal quality can be improved.

Also, because the seal part 26 and the receiving chamber outer wall 28 are formed with a soft material, the seal quality of the seal part 26 is improved, and even when the lower end of the receiving chamber outer wall 28 moves back and forth against the fixing nut 71, there is no noise made from the lower end of the receiving chamber outer wall 28 hitting the fixing nut 71.

Furthermore, because insertion-coupling receiving parts 14A, 14B, into which the fixing nut 71 is insertion-coupled, are provided inside the other end of the cover part 11, it is possible to install the pipe connector cover C in a manner so as not to rotate in the circumferential direction of the high pressure fuel pipe 61, by insertion-coupling the fixing nut 71 into the insertion-coupling receiving parts 14A, 14B.

Also, because two ends in the circumferential direction of the divided receiving chamber 31 are blocked by the connecting walls 30L, 30R, the divided blocking parts 22A, 22B can be connected in an annular form with no gap in between, and the divided seal parts 26 can be connected in an annular form with no gap in between.

Furthermore, because [the pipe connector cover] is constituted by divided pipe connector covers 42A, 42B that are divided into two parts on a plane parallel to the axial direction of the high pressure fuel pipe 61, and because each of these divided pipe connector covers 42A, 42B is provided with catch-coupling projections 15a1, 15a2, 15b1, 15b2 and catching parts 17A1, 17A2, 17B1, 17B2 for integrally coupling the two parts, it is possible to install the pipe connector cover C on the high pressure fuel pipe 61 by placing the high pressure fuel pipe 61 between the two divided pipe connector covers 42A, 42B, holding the high pressure fuel pipe 61 between the two divided pipe connector covers 42A, 42B, and catch-coupling the catch-coupling projections 15a1, 15a2, 15b1, 15b2 to the corresponding catching parts 17B1, 17B2, 17A1, 17A2, and therefore the installation of the pipe connector cover C on the high pressure fuel pipe 61 becomes simpler.

Also, because the divided pipe connector covers 42A, 42B are divided into divided cover parts 12A, 12B and divided blocking parts 22A, 22B, it is possible to separately manufacture the divided cover parts 12A, 12B, for which mainly mechanical strength is required, and the divided blocking parts 22A, 22B, for which mainly seal quality is required, and therefore the divided pipe connector covers 42A, 42B can be manufactured easily.

In the present working example, an example was shown, in which the open part provided on the receiving chamber outer wall 28 was made as a cut-out 29, but the open part may be an opening, hole, or the like. Also, an example was shown, in which the cut-out (open part) 29 was provided on the receiving chamber outer wall 28 that contacts with the upper face of the fixing nut (fastening tool) 71, but liquefied fuel is discharged to the outside of the divided receiving chamber 31 from a gap between the receiving chamber outer wall 28 and the fixing nut (fastening tool) 71 even when an opening is not provided on the receiving chamber outer wall 28.

Also, in the present working example, an example was shown, in which the divided pipe connector covers 42A, 42B were constituted by divided cover parts 12A, 12B and divided blocking parts 22A, 22B, but the divided cover part 12A (12B) and the divided blocking part 22A (22B) also may be integrally constituted by two-color molding, or the like.

Also, an example was shown, in which the pipe connector cover C was constituted by two divided pipe connector covers 42A, 42B, but the pipe connector cover C also may be integrally constituted (one part).

Thus, in the case when the divided pipe connector covers 42A, 42B are two-color molded, or when the pipe connector cover C is integrally constituted (one part), it is preferable that at least the seal part 26 and the lower end of the receiving chamber outer wall 28 be formed with a soft material.

Also, in the case when the pipe connector cover C is integrally constituted (one part), the receiving chamber may be provided in an arc form on the outer perimeter of the high pressure fuel pipe 61 as in the abovementioned working example, or it may be provided in an annular form around the entirety of the outer perimeter of the high pressure fuel pipe 61.

The present application is based on a Japanese patent application (Patent Application 2008-096173) filed on April 2, 2008, and the substance thereof is incorporated herein as reference.

### Explanation of the Symbols

- C: Pipe connector cover
- 11: Cover part
- 12A: Divided cover part
- 12B: Divided cover part
- 13A: Divided insertion-coupling receiving annular part
- 13B: Divided insertion-coupling receiving annular part
- 13a1: Divided annular protruding part
- 13a2: Divided annular protruding part
- 13a3: Divided annular recessed part
- 13b1: Divided annular protruding part
- 13b2: Divided annular protruding part
- 13b3: Divided annular recessed part
- 14A: Divided insertion-coupling receiving part
- 14B: Divided insertion-coupling receiving part
- 15A1: Catch-coupling piece
- 15A2: Catch-coupling piece
- 15a1: Catch-coupling projection (catch-coupling part)
- 15a2: Catch-coupling projection (catch-coupling part)
- 15B1: Catch-coupling piece
- 15B2: Catch-coupling piece
- 15b1: Catch-coupling projection (catch-coupling part)
- 15b2: Catch-coupling projection (catch-coupling part)
- 16A1: Insertion hole
- 16A2: Insertion hole
- 16B1: Insertion hole
- 16B2: Insertion hole
- 17A1: Catching part (catch-coupling receiving part)
- 17A2: Catching part (catch-coupling receiving part)
- 17B1: Catching part (catch-coupling receiving part)
- 17B2: Catching part (catch-coupling receiving part)
- 21: Blocking part
- 22A: Divided blocking part
- 22B: Divided blocking part
- 23: Pipe insertion hole
- 24: Insertion-coupling annular part
- 25: Divided insertion-coupling recessed part
- 26: Divided seal part
- 27i: Conical surface (inner surface, inner perimeter surface)
- 27o: Conical surface (outer surface, outer perimeter surface)
- 28: Receiving chamber outer wall
- 29: Cut-out (open part)
- 30L: Connecting wall
- 30R: Connecting wall
- 31: Divided receiving chamber
- 42A: Divided pipe connector cover
- 42B: Divided pipe connector cover
- U: Connector
- 51: Common rail
- 52: Connecting cylindrical part
- 53: Conical surface (connecting surface)
- 54: Threaded hole
- 61: High pressure fuel pipe
- 62: Thick part
- 63: Conical surface (connecting surface)
- 71: Fixing nut (fastener)

## Claims

1. An arrangement having a pipe connector cover (C) and a high pressure fuel pipe (61) with a connector (U), the pipe connector cover (C) for covering a connector (U) of a high pressure fuel pipe (61) of an engine, comprising:
a cylindrical cover part (11);
a blocking part (21) that has a pipe insertion hole (23) and closes the upper end of said cover part (11);
wherein said blocking part (21) comprises a seal part (26) in which an inner perimeter that forms said pipe insertion hole (23) contacts closely to an outer perimeter of said high pressure fuel pipe (61), and a receiving chamber (31) that is positioned outside of said seal part (26), is open on a lower face, and receives fuel ejected from said connector (U); and
a lower end of a receiving chamber outer wall (28) that forms said receiving chamber (31) is contacted with an upper surface of a fastening tool (71) that comprises said connector (U).

2. An arrangement according to claim 1, wherein an open part (29) is provided on said receiving chamber outer wall (28).

3. An arrangement according to claim 1 or 2, wherein said receiving chamber (31) is provided around an entirety of the outer perimeter of said high pressure fuel pipe (61) or in an arc form on the outer perimeter of said high pressure fuel pipe (61); and
an outer surface of said seal part (26) is an inclined surface that approaches said high pressure fuel pipe (61) as it goes toward said connector (U).

4. An arrangement according to any one of claims 1 to 3, wherein at least said seal part (26) and a lower end of said receiving chamber outer wall (28) are formed with a soft material.

5. An arrangement according to any one of claims 1 to 4, wherein an insertion-coupling receiving part (14A, 14B) into which said fastening tool (71) is insertion-coupled is provided inside the lower end of said cover part (11).

6. An arrangement according to any one of claims 1 to 5, wherein the pipe connector cover (C) is constituted by divided pipe connector covers (42A, 42B) that are divided into two parts on a plane parallel to the axial direction of said high pressure fuel pipe (61); and
each of said divided pipe connector covers (42A, 42B) is provided with a catch-coupling part (15a1, 15a2, 15b1, 15b2) or a catch-coupling receiving part (17A1, 17A2, 17B1, 17B2) for integrally coupling the two parts.

## Patentansprüche

1. Anordnung mit einer Rohrverbinderabdeckung (C) und einem Hochdrucktreibstoffrohr (61) mit einem Verbinder (U), wobei die Rohrverbinderabdeckung (C) zum Abdecken eines Verbinders (U) eines Hochdrucktreibstoffrohrs (61) eines Motors ist, umfassend:
ein zylindrisches Abdeckteil (11);
ein Blockierteil (21), welcher ein Rohreinfügungsloch (23) aufweist und das obere Ende des Abdeckteils (11) schließt;
wobei der Blockierteil (21) einen Dichtteil (26), in welchem ein innerer Umfang, welcher das Rohreinfügungsloch (23) bildet, einen äußeren Umfang des Hochdrucktreibstoffrohrs (61) eng umschließt, und eine Aufnahmekammer (31) umfasst, welche außerhalb des Dichtteils (26) positioniert ist, an einer Unterseite offen ist und vom Verbinder (U) ausgestoßenen Treibstoff aufnimmt; und
ein unteres Ende einer Aufnahmekammeraußenwand (28), welche die Aufnahmekammer (31) bildet, in Kontakt mit einer oberen Oberfläche eines Befestigungsmittels (71) steht, welches der Verbinder (U) umfasst.

2. Anordnung nach Anspruch 1, wobei ein offener Teil (29) an der Aufnahmekammeraußenwand (28) vorgesehen ist.

3. Anordnung nach Anspruch 1 oder 2, wobei die Aufnahmekammer (31) um den gesamten äußeren Umfang des Hochdrucktreibstoffrohrs (61) herum oder in einer Bogenform am äußeren Umfang des Hochdrucktreibstoffrohrs (61) vorgesehen ist; und
eine äußere Oberfläche des Dichtteils (26) eine geneigte Oberfläche ist, welche sich dem Hochdrucktreibstoffrohr (61) zum Verbinder (U) hin annähert.

4. Anordnung nach einem der Ansprüche 1 bis 3, wobei zumindest das Dichtteil (26) und ein unteres Ende der Aufnahmekammeraußenwand (28) aus einem weichen Material gebildet sind.

5. Anordnung nach einem der Ansprüche 1 bis 4, wobei ein durch Einfügen verbindendes Aufnahmeteil (14A, 14B), mit welchem das Befestigungsmittel, (71) durch Einfügen verbunden ist, innerhalb des unteren Endes des Abdeckteils (11) vorgesehen ist.

6. Anordnung nach einem der Ansprüche 1 bis 5, wobei die Rohrverbinderabdeckung (C) durch geteilte Rohrverbinderabdeckungen (42A, 42B) gebildet ist, welche in zwei Teile an einer zur Axialrichtung des Hochdrucktreibstoffrohrs (61) parallelen Ebene geteilt sind; und
jede der geteilten Rohrverbinderabdeckungen (42A, 42B) mit einem durch Eingreifen verbindenden Teil (15a1, 15a2, 15b1, 15b2) oder einem durch Eingreifen verbindenden Aufnahmeteil (17A1, 17A2, 17B1, 17B2) zum integralen Verbinden der zwei Teile vorgesehen ist.

## Revendications

1. Mécanisme ayant un couvercle de raccord de conduite (C) et une conduite de carburant haute pression (61) avec un raccord (U), le couvercle de raccord de conduite (C) pour recouvrir un raccord (U) d'une conduite de carburant haute pression (61) d'un moteur, comprenant:
un élément de recouvrement (11) cylindrique ;
un élément de blocage (21) qui a un orifice d'insertion de conduite (23) et ferme l'extrémité supérieure dudit élément de recouvrement (11);
où ledit élément de blocage (21) comprend un élément d'étanchéité (26) dans lequel un périmètre intérieur qui constitue ledit orifice d'insertion de conduite (23) est en contact direct avec un périmètre extérieur de ladite conduite de carburant haute pression (61), et une chambre réceptrice (31) qui est positionnée à l'extérieur dudit élément d'étanchéité (26), est ouverte sur une face inférieure et reçoit du carburant éjecté dudit raccord (U); et
une extrémité inférieure d'une paroi extérieure de la chambre réceptrice (28) qui constitue ladite chambre réceptrice (31) est reliée à une surface supérieure d'un outil de serrage (71) que comprend ledit raccord (U).

2. Mécanisme selon la revendication 1, où une partie ouverte (29) est prévue sur ladite paroi extérieure de la chambre réceptrice (28).

3. Mécanisme selon la revendication 1 ou 2, où ladite chambre réceptrice (31) est prévue autour de l'intégralité du périmètre extérieur de ladite conduite de carburant haute pression (61) ou en forme d'arc sur le périmètre extérieur de ladite conduite de carburant haute pression (61); et
une surface extérieure dudit élément d'étanchéité (26) est une surface inclines qui se rapproche de ladite conduite de carburant haute pression (61) puisqu'elle va vers ledit raccord (U).

4. Mécanisme selon l'une des revendications 1 à 3, où au moins ledit élément d'étanchéité (26) et une extrémité inférieure de ladite paroi extérieure de la chambre réceptrice (28) sont réalisés en un matériau souple.

5. Mécanisme selon l'une des revendications 1 à 4, où un contre-élément d'accouplement à insertion (14A, 14B) dans lequel ledit outil de serrage (71) est couplé par insertion est prévu à l'intérieur de l'extrémité inférieure dudit élément de recouvrement (11).

6. Mécanisme selon l'une des revendications 1 à 5, où le couvercle de raccord de conduite (C) est constitué par des couvercles de raccord de conduite divisés (42A, 42B) qui sont divisés en deux éléments sur un plan parallèle à la direction axiale de ladite conduite de carburant haute pression (61); et
chacun desdits couvercles de raccord de conduite divisés (42A, 43B) est doté d'un élément d'accouplement d'arrêt (15a1, 15a2, 15b1, 15b2) ou d'un contre-élément d'accouplement d'arrêt (17A1, 17A2, 17B1, 17B2) pour l'accouplement intégral des deux éléments.
